(19)

Europäisches
Patentamt
European
Patent Office
Office européen
des brevets

(11)　EP 2 503 047 B1

(12)　**EUROPEAN PATENT SPECIFICATION**

(45) Date of publication and mention
of the grant of the patent:
**05.03.2014　Bulletin 2014/10**

(51) Int Cl.:
***D06F 37/20*** *(2006.01)*　　***D06F 37/30*** *(2006.01)*
***H02P 21/14*** *(2006.01)*

(21) Application number: **11159598.9**

(22) Date of filing: **24.03.2011**

(54) **Rotatable-drum laundry machine comprising an estimator system configured to estimate the motor-torque of a universal electric motor connected to the laundry drum, and operating method thereof**

Waschmaschine mit Drehtrommel mit einem zur Schätzung des Motordrehmoments eines an der Wäschetrommel angeschlossenen elektrischen Universalmotors konfigurierten Schätzsystem und Betriebsverfahren dafür

Machine à laver le linge à tambour tournant comprenant un système d'estimation configuré pour estimer le couple moteur d'un moteur électrique universel connecté au tambour du linge et son procédé de commande

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.09.2012　Bulletin 2012/39**

(73) Proprietor: **Electrolux Home Products Corporation N.V.**
**1130 Brussel (BE)**

(72) Inventors:
• **Altinier, Fabio**
**33080 Porcia (PN) (IT)**
• **Girotto, Terenzio**
**33080 Porcia (PN) (IT)**
• **Bedetti, Nicola**
**33080 Porcia (PN) (IT)**

• **Maguolo, Costantino**
**33080 Porcia (PN) (IT)**
• **Barabani, Riccardo**
**33080 Porcia (PN) (IT)**

(74) Representative: **Nardoni, Andrea et al**
**Electrolux Italia S.p.A.**
**Corso Lino Zanussi, 30**
**33080 Porcia (PN) (IT)**

(56) References cited:
**US-A1- 2004 211 009**

• **BORSTING H ET AL: "Estimation of mechanical signals in induction motors using the recursive prediction error method", 19930101, 1 January 1993 (1993-01-01), pages 455-460, XP006511436,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a rotatable-drum laundry machine comprising an estimator system configured to estimate the motor-torque of an universal electric motor connected to the laundry drum, and operation method thereof, as disclosed e.g. in US-A-2004/0211009.

In particular, the present invention relates to a control system able to estimate the mechanical torque supplied by an electric motor to the rotatable-drum of a home laundry washing or laundry drying machines, to which following description refers purely by way of example without implying any loss of generality.

To reduce production cost, some electric household appliances, such as laundry washing machines or laundry drying machine, are equipped by the manufacturers with so-called "universal" electric motors, which have the big advantage of being powered with alternating current by particularly simple, low-cost power circuits, while at the same time providing similar performance as direct-current electric motors, i.e. high starting torque, compactness, high rotation speed, etc.

It should be pointed out that the term "universal motor" is used herein to indicate a wire-wound stator motor that can operate on both direct and alternating current. Alternating-current operation of the motor is made possible by the fact that, thanks to the power circuit, the electric currents in the stator and rotor of the motor are inverted simultaneously, and the relative magnetic fields work in the same way, generating the same type of attraction or repulsion force.

As is known, certain operating parameters of the laundry machine must be measured to permit a direct electronic control of the laundry machine working.

More specifically, the latest laundry machines normally comprise a control system that controls the universal electric motor by regulating its speed instant by instant to counteract, for example, any unbalance caused by the laundry in the laundry drum during the spin cycle, and so reduce walking and/or the noise level of the appliance.

Processing by the control system is substantially based on determining mechanical quantities, such as the speed and/or torque of the motor.

More specifically, the speed of the motor is determined "directly" by a speed sensor such as a tachometer fitted to the drive shaft, whereas motor-torque is determined "indirectly" by means of estimator methods/algorithms configured to process several electric motor parameters, such as the electric power/current.

However, the prior art estimator methods/algorithms have the drawback of not being able to estimate with high precision the motor-torque because of the variable load/laundry condition and variable performances of the universal electric motor.

In addition, estimator methods/algorithms above cited are based on mathematical model that requires, at the planning stage, a specific complex and expensive calibration of many mathematical coefficients/parameters characterizing the mathematical model.

It is an object of the present invention to provide a rotatable-drum laundry machine comprising an estimator system configured to estimate the motor torque of the universal electric motor more precisely than the known prior art methods/algorithms, without requiring any preventive calibration of the coefficients/parameters at the planning stage.

According to the present invention, there is provided a rotatable-drum laundry machine comprising a casing, a laundry drum mounted inside the casing to rotate about an rotation axis, and an universal electric motor connected to said laundry drum to rotate laundry drum about said rotation axis, and an estimator system configured to estimate the motor torque according to the equation:

$$T \cong m \cdot I_{RMS} + q$$

wherein T is the motor torque indicating the torque that motor supplied to drum; m and q are a first and a second linear parameter, and $I_{RMS}$ is a first value indicating the root mean square current supplied to said universal electric motor .

Preferably, estimator system is further configured to estimate said first and second linear parameter based on an energy balance associated with said universal electric motor.

Preferably, estimator system is further configured to sample the motor current and to determine said first value based on said sampled motor currents.

Preferably, estimator system is further configured to: sample the motor voltage, the motor current, and the motor speed, every a first prefixed period; every a second prefixed period, determine said first value indicating the root mean square current supplied to the universal electric motor during the second prefixed period, based on sampled motor currents; every a second prefixed period, determine a second value indicating the average electric power supplied to the universal electric motor during the second prefixed period, based on said sampled motor voltages and said sampled currents motor; every said second prefixed period, determine a third value indicating the average motor speed of the universal electric motor during the second prefixed period, based on sampled motor speeds; perform a recursive algorithm based on the first, second, and third values to estimate the first and second linear parameter relative to an energy balance associated with said universal electric motor; estimate motor torque on the basis of said first value and said estimated first and second linear parameter.

Preferably, estimator system is further configured to perform a recursive algorithm based on the first, second and third values to estimate said first and second linear parameter and a further third linear parameter R, relative to the following energy balance equation:

$$P_{El} \cong R \cdot I^2_{RMS} + m \cdot (\omega \cdot I_{RMS}) + q \cdot \omega$$

wherein the third linear parameter R is a value indicating electric resistance relative to the losses in the universal electric motor.

Preferably, estimator system is further configured to perform a recursive algorithm based on the first, second and third values to estimate the first, second linear parameter and a further third linear parameter R, and a further fourth linear parameter K, relative to the following energy balance equation:

$$P_{El} \cong R \cdot I_{RMS} + m \cdot (\omega \cdot I_{RMS}) + q \cdot \omega + K$$

Preferably, estimator system is further configured to perform a recursive least square method based on the first, second and third values to estimate said first and second linear parameter.

Preferably, estimator system is further configured to perform a recursive least square method based on the first, second and third values to estimate said first, second and third linear parameter.

Preferably, estimator system is further configured to perform a recursive least square method based on the first, second and third values to estimate said first, second, third and fourth linear parameter.

Preferably, estimator system is further configured to perform a recursive linear interpolation method based on the first, second and third values to estimate said first and second linear parameter.

Preferably, estimator system is further configured to perform a recursive linear interpolation method based on the first, second and third values to estimate said first, second and third linear parameter.

Preferably, estimator system is further configured to perform a recursive linear interpolation method based on the first, second and third values to estimate said first, second, third and fourth linear parameter.

Preferably, the first prefixed period is about $0.1*10^{-3}$ seconds; the second prefixed period is about the half period of main voltage frequency.

According to the present invention, there is also provided a method for estimating the motor torque supplied by a universal electric motor to a rotatable laundry drum of a laundry machine; comprising the step of: estimating the motor torque according to the equation:

$$T \cong m \cdot I_{RMS} + q$$

wherein T is the motor torque indicating the torque that motor supplied to drum; m and q are a first and second linear parameter, and is a first value indicating the root mean square current supplied to said universal electric motor.

Preferably, method comprises the step of estimating said first and second linear parameter based on an energy balance associated with said universal electric motor.

Preferably, method comprises the steps of sampling the motor current and determining said first value based on said sampled motor currents.

Preferably, method comprises the step of: sampling the motor voltage, the motor current, and the motor speed, every first prefixed period; every a second prefixed period, determining a first value indicating the average electric power supplied to the universal electric motor during the second prefixed period, based on said sampled motor voltages and said sampled motor currents; every said second prefixed period, determining a second value indicating the root mean square current supplied to the universal electric motor during the second prefixed period, based on sampled motor currents; every said second prefixed period, determining a third value indicating the average motor speed of the universal electric motor during the second prefixed period, based on sampled motor speeds; performing a recursive algorithm based on the first, second and third values to estimate said first and second linear parameter relative to an energy balance associated with said universal electric motor; estimating the motor torque on the basis of said second value and said estimated first and second linear parameter.

Prefeably, method comprises the step of performing a recursive algorithm based on the first second and third values to estimate said first and second linear parameter and a further third linear parameter R, relative to the following energy balance equation:

$$P_{El} \cong R \cdot I_{RMS}^2 + m \cdot (\omega \cdot I_{RMS}) + q \cdot \omega$$

wherein said third linear parameter R is a value indicating electric resistance relatives to the losses in the universal electric motor.

Preferably, method comprisesg the step of performing a recursive algorithm based on the first second and third values to estimate said first and second linear parameter and a further third linear parameter R, and a fourth linear parameter K, relative to the following energy balance equation:

$$P_{El} \cong R \cdot I_{RMS} + m \cdot (\omega \cdot I_{RMS}) + q \cdot \omega + K$$

Preferably, method comprises the step of performing a recursive least square method based on the first, second and third values to estimate said first and second linear parameter.

Preferably, method comprises the step of performing a recursive least square method based on the first, second and third values to estimate said first, second and third linear parameter.

Preferably, method comprises the step of performing a recursive least square method based on the first, second and third values to estimate said first, second, third and fourth linear parameter.

Preferably, method comprises the step of performing a recursive linear interpolation method based on the first, second and third values to estimate said first and second linear parameter.

Preferably, method comprises the step of performing a recursive linear interpolation method based on the first, second and third values to estimate said first, second and third linear parameter.

Preferably, method comprises the step of performing a recursive linear interpolation method based on the first, second and third values to estimate said first, second, third and fourth linear parameter.

Preferably, the first prefixed period is about $0.1 \ast 10\text{-}3$ second; the second period is about a half period of $10 \ast 10^{-3}$ second in case of frequency of 50Hz. A non-limiting embodiment of the present invention will be described by way of example with reference to the accompanying drawings, in which:

Figure 1 shows a partly sectioned schematically view in perspective, with parts removed for clarity, of an rotatable-drum laundry machine comprising a estimator system configured to estimate the motor torque of an universal electric motor connected to the drum, in accordance with the teachings of the present invention.

Figure 2 shows a flow chart of the operations performed by the estimator system to estimate the motor torque of the universal electric motor shown in Figure 1;

Figure 3 is a diagram of the actual electric power compared with the electric power estimated by the estimator system shown in Figure 1;

Figure 4 is a diagram of the actual motor torque compared with the motor-torque estimated by the control system shown in Figure 1; and

Figure 5 is a diagram of some parameters which characterized the motor-torque and/or the electric power estimated by means of the estimator system shown in Figure 1.

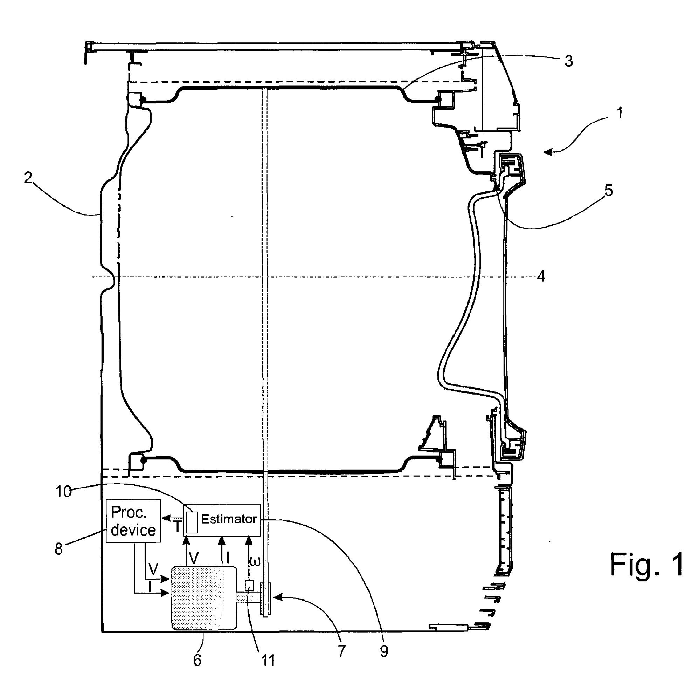

Number 1 in Figure 1 schematically indicates as a whole an electric household laundry appliance such as a rotatable-drum laundry washing machine or a laundry drying machine, which substantially comprises a casing/cabinet 2; and a rotatable laundry drum 3 mounted inside casing 2 to rotate freely about an axis of rotation 4, and directly facing a laundry loading/unloading opening 5 formed in a wall of casing 2.

Appliance 1 also comprises a universal electric motor 6 having an output shaft connected to rotatable laundry drum 3 by means of a transmition system 7 to rotate drum 3 about axis of rotation 4; and a processing device 8 for controlling the speed $\omega$ of universal electric motor 6 by regulating electrical control parameters such as supplied current I and/or voltage V.

Appliance 1 also comprises an estimator system 9 configured to estimate the motor-torque T outputted by the universal electric motor 6.

According to the present invention estimation of the motor-torque T by estimator system 9 is substantially based upon two mains mathematical equations a) and b) hereinafter described, that applicant achieved based on in-depth researches and laboratory tests.

In detail, researches and laboratory tests revealed that the universal electric motor 6 outputs a motor torque T which is substantially proportional to the root mean square value of electric current $I_{RMS}$ according to following first equation:

$$a) \qquad T \cong m \cdot I_{RMS} + q$$

wherein: $I_{RMS}$ is the root mean square also called "quadratic mean" of the electric current determined on the basis of motor currents sampled during a first prefixed period;

-m and q are values indicative of the linear parameters characterizing electric behavior of the universal electric motor 6 to be controlled.

Accordingly, to estimate the motor torque T is necessary to automatically determine the linear parameters m and q characterizing the universal electric motor 6.

To this purpose, applicant established a method for determining the linear parameters m and q on the basis of an approximated energy balance equation characterizing the energy behavior of universal electric motor 6:

$$b) \qquad P_{El} = P_{Loss} + P_{Mecc} = R \cdot I_{RMS}^2 + T \cdot \omega \cong R \cdot I_{RMS}^2 + m \cdot (\omega \cdot I_{RMS}) + q \cdot \omega$$

wherein:

- $P_{El}$ is a value indicating the average electric power absorbed by the universal electric motor 6 during a second prefixed period;
- $P_{LOSS}$ is a value indicating the average power dissipated by the universal electric motor 6, i.e. in the coil resistance and in the magnetic circuit during the second prefixed period;
- $P_{MECC}$ is a value indicating the average mechanical power that universal electric motor 6 outputs during the second prefixed period;
- R is a value indicating electric resistance responsible for all the losses (electric and magnetic) in the universal electric motor 6;
- $\omega$ is a value indicating speed of the universal electric motor 6.

It should be pointed out that equation b)

$$P_{El} \cong R \cdot I_{RMS}^2 + m \cdot (\omega \cdot I_{RMS}) + q \cdot \omega$$

advantageously allows to estimate the average electric power $P_{El}$ by means of a linear combination of the quantities $(I_{RMS}^2)$, $(\omega \cdot I_{RMS})$ and $(\omega)$.

Therefore, estimator system 9 is configured to measure the instantaneous voltage V, current I and speed $\omega$ in the universal electrical motor 6 according to operative steps hereinafter disclosed to evaluate the energy balance, and estimates the linear parameters R, m, q by using a recursive algorithm based, for example, on the least square method, or on linear interpolation method.

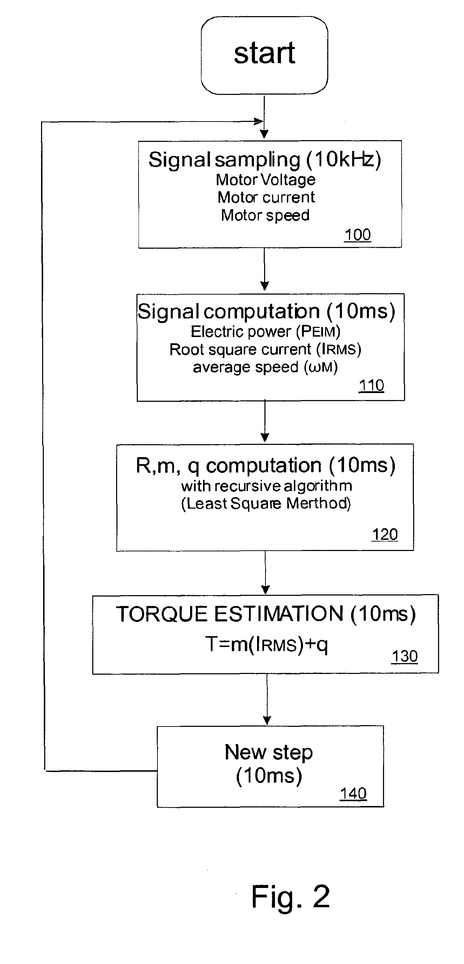

Figure 2 shows a flow chart of the essential operations of the estimator method performed by estimator system 9 to estimate the motor torque T which the universal electric motor 6 supplies to the drum 3.

At the beginning (Block 100), the estimator system 9 samples several motor parameters, such as: the motor voltage V, the motor current I, and the motor speed $\omega$.

Estimator system 9 may be configured to sample and store in storage means 10 the motor parameters V, I and $\omega$, every the first prefixed period, preferably $0.1 \cdot 10^{-3}$ second.

In a preferred embodiment, motor parameters, namely motor voltage V and the motor current I, are sampled, for example, based on a measuring means, such as shunt arranged within the electronic circuit of the processing device 8.

Regarding the motor speed $\omega$, it may be sampled by a speed sensor, such as a tachometer 11 coupled with the motor shaft.

The estimator system 9 is further configured to process the motor parameters V, I and $\omega$ memorized in storage means 10 every a second prefixed period, preferably $10*10^{-3}$ second, for determining the following values (Block 110):

- $P_{ELM}$ which is a value indicating the average electric power supplied to the universal electric motor 6 during the second prefixed period;
- $I_{RMS}$ which is a value indicating the root mean square current supplied to the universal electric motor 6 during the second prefixed period;
- $\omega_M$ which is a value indicating the average motor speed of the universal electric motor 6 during the second prefixed period.

The estimator system 9 is further configured to estimate the linear parameters R, m and q associated with the approximated energy balance equation b) by using a recursive algorithm such as a recursive least square method or recursive linear interpolation method, based on values $P_{ELM}$, $I_{RMS}$, and $\omega_M$ stored during the second prefixed period (Block 120). Using the recursive algorithm is advantageous since no usage of buffers and a continuous estimation of the real working point parameters, i.e. linear parameters are continuously adjusted to match the real ones independently of the motor working point.

The estimator system 9 may determine linear parameters R, m and q, every the second prefixed period of $10*10^{-3}$ second, for example, or every a period multiple of $10*10^{-3}$ second.

In a preferred embodiment, the prefixed second period is equal to half period of the main voltage frequency, i.e. $10*10^{-3}$ second in case of 50Hz.

It should be pointed out that every a second period of $10*10^{-3}$ seconds, for example, the average electric power $P_{EIM}$ is computed as the mean product of current and voltage in the motor; $I_{RMS}$ is evaluated as the mean root square value of the current samples; $\omega_M$ is the mean value of the motor speed.

In a preferred embodiment, the first sample frequency (i.e. the inverse of the first prefixed period) has a value at least twenty times greater than the frequency of the current/voltage supplied to the electric motor (typically 50 HZ). In other words, sample frequency may be greater than 1kHz, preferably 10kHz.

Finally, when the parameters R, m, q are determined, estimator system 9 estimates the torque T based on equation (a) and on parameters R, m, q previously determined (Block 130).

Every a third prefixed period, preferably $10*10^{-3}$ second, estimator system 9 performs again operations of block 100-130 above described (Block 140).

According to one embodiment of the present invention the linear approximation of the energy balance equation b) can be changed in the following equation c) which further approximates the energy balance:

c)

$$P_{El} = P_{Loss} + P_{Mecc} \cong (R \cdot I_{RMS} + K) + T \cdot \omega \cong R \cdot I_{RMS} + m \cdot (\omega \cdot I_{RMS}) + q \cdot \omega + K$$

wherein K is a constant value.

In this case, estimator system 9 estimates the linear parameters R, m, q and K associated with the approximately energy balance equation c) by using the recursive algorithm such as a recursive least square method or recursive linear interpolation method.

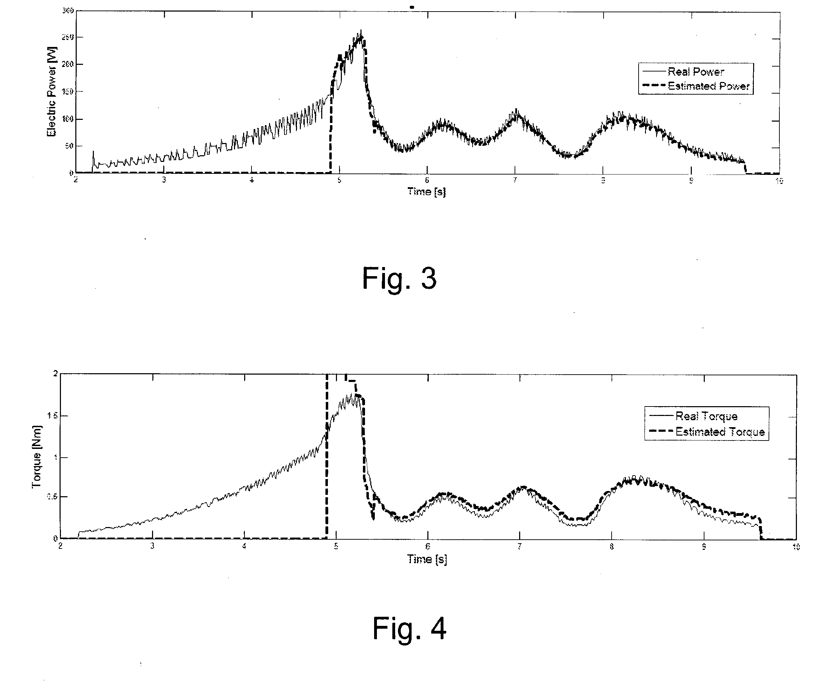

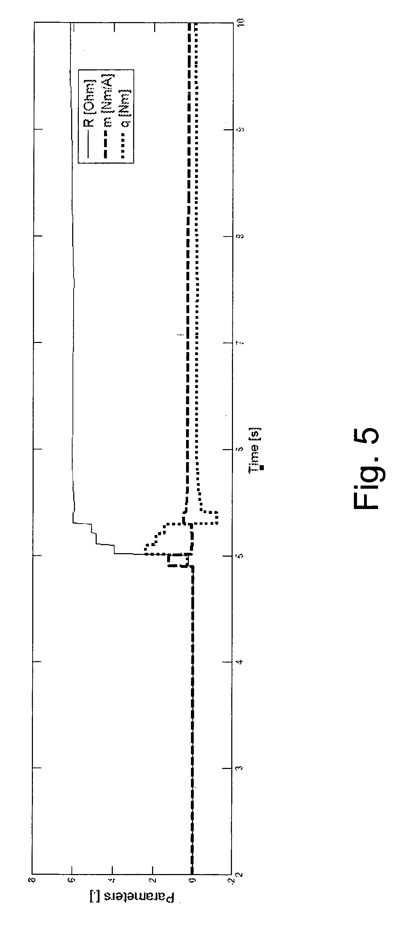

Figures 3 and 4 shown diagrams of the actual electric power and torque compared with the electric power and torque respectively, estimated by the estimator system 9 and determined by means of laboratory tests, whereas Figure 5 is diagram of linear parameters R, m and q estimated by the estimator system 9 and associated with electric power and torque shown in Figures 3 and 4.

Rotatable-drum laundry machine 1 has following advantages.

The estimator method/system described in the invention is able to estimate torque of any type of universal electric motor, and determine automatically the motor parameters suitable for the torque detection without needing experimental calibrations.

In addition, the estimator method/system works continuously: in this way the computed parameters match always the real ones independently of the motor working point, namely independently of different mains voltage, room temperature, motor speeds or other motor parameters. Therefore estimator method/system is advantageously used for different universal motor which consequently may be used in the same machine.

It should be pointed out that the torque information is the base for the drum inertia computation (i.e. the laundry amount), the unbalance computation and for improving the distribution phase before spinning (unbalance estimation is more precise and distribution is more effective).

Finally, an advanced torque management improves the washing/drying performances both in the washing and in the washing-dryer machines.

Clearly, changes may be made to the system, method, and electric household appliance as described herein without, however, departing from the scope of the present invention as defined in the accompanying Claims.

**Claims**

1. Rotatable-drum laundry machine (1) comprising: a casing (2); a laundry drum (3) mounted inside the casing (2) to rotate about an rotation axis (4); and an universal electric motor (6) connected to said laundry drum (3) to rotate laundry drum (3) about said rotation axis (4);

   rotatable-drum laundry machine being **characterized in** comprising an estimator system (9) configured to estimate the motor torque according to the equation:

$$T \cong m \cdot I_{RMS} + q$$

   wherein T is the motor torque indicating the torque that motor supplied to drum (3); m and q are a first and a second linear parameter, and $I_{RMS}$ is a first value indicating the root mean square current supplied to said universal electric motor (6).

2. Laundry machine according to Claim 1, wherein estimator system (9) is further configured to estimate said first and a second linear parameter (m), (q) based on an energy balance associated with said universal electric motor (6).

3. Laundry machine according to Claim 1 or 2, wherein estimator system (9) is further configured to sample the motor current (I) and to determine said first value ($I_{RMS}$) based on said sampled motor currents (I).

4. Laundry machine according to Claim 1 or Claim 2, wherein estimator system (9) is further configured to:

   - sample the motor voltage (V), the motor current (I), and the motor speed (ω), every a first prefixed period;
   - every a second prefixed period, determine said first value ($I_{RMS}$) indicating the root mean square current supplied to the universal electric motor (6) during the second prefixed period, based on sampled motor currents (I);
   - every a second prefixed period, determine a second value ($P_{ELM}$) indicating the average electric power supplied to the universal electric motor (6) during the second prefixed period, based on said sampled motor voltages (V) and said sampled currents motor (I);
   - every said second prefixed period, determine a third value ($ω_M$) indicating the average motor speed of the universal electric motor (6) during the second prefixed period, based on sampled motor speeds (ω);
   - perform a recursive algorithm based on the first ($I_{RMS}$), second ($P_{ELm}$), and third values ($ω_M$) to estimate the first and second linear parameter (m), (q) relative to an energy balance associated with said universal electric motor (6);
   - estimate motor torque (T) on the basis of said first value ($I_{RMS}$) and said estimated first and second linear parameter (m), (q).

5. Laundry machine according to Claim 4, wherein estimator system (9) is further configured to perform a recursive algorithm based on the first ($I_{RMS}$), second ($P_{ELm}$) and third values ($ω_M$) to estimate said first and second linear parameter (m), (q) and a further third linear parameter (R), relative to the following energy balance equation:

$$P_{El} \cong R \cdot I_{RMS}^2 + m \cdot (ω \cdot I_{RMS}) + q \cdot ω$$

wherein the third linear parameter R is a value indicating electric resistance relative to the losses in the universal electric motor (6).

6. Laundry machine according to Claims 4, wherein estimator system (9) is further configured to perform a recursive algorithm based on the first ($I_{RMS}$), second ($P_{ELm}$) and third values ($\omega_M$) to estimate the first, second linear parameter (m), (q), and a further third linear parameter (R), and a further fourth linear parameter (K) relative to the following energy balance equation:

$$P_{El} \cong R \cdot I_{RMS} + m \cdot (\omega \cdot I_{RMS}) + q \cdot \omega + K$$

7. Laundry machine according to Claims 4, wherein estimator system (9) is further configured to perform a recursive least square method based on the first ($I_{RMS}$), second ($P_{ELm}$) and third values ($\omega_M$) to estimate said first and second linear parameter (m), (q).

8. Laundry machine according to Claims 4, wherein estimator system (9) is further configured to perform a recursive linear interpolation method based on the first ($I_{RMS}$), second ($P_{ELm}$) and third values ($\omega_M$) to estimate said first and second linear parameter (m), (q).

9. Laundry machine according to any of the foregoing Claims, wherein the first prefixed period is about $0.1 * 10^{-3}$ seconds; the second prefixed period is about the half period of main voltage frequency.

10. Method for estimating the motor torque (T) supplied by a universal electric motor (6) to a rotatable laundry drum (3) of a laundry machine (1);
said method being **characterized in**:

estimating the motor torque according to the equation:

$$T \cong m \cdot I_{RMS} + q$$

wherein T is the motor torque indicating the torque that motor supplied to drum; m and q are a first and second linear parameter, and $I_{RMS}$ is a first value indicating the root mean square current supplied to said universal electric motor (6).

11. Method according to Claim 10, comprising the step of estimating said first and second linear parameter (m), (q) based on an energy balance associated with said universal electric motor (6).

12. Method according to Claim 10 or 11, comprising the steps of sampling the motor current (I) and determining said first value ($I_{RMS}$) based on said sampled motor currents (I).

13. Method according to Claims 10 or 11, comprising the step of:

- sampling the motor voltage (V), the motor current (I), and the motor speed ($\omega$), every first prefixed period;
- every a second prefixed period, determining a first value ($P_{ELM}$) indicating the average electric power supplied to the universal electric motor (6) during the second prefixed period, based on said sampled motor voltages (V) and said sampled motor currents (I);
- every said second prefixed period, determining a second value ($I_{RMS}$) indicating the root mean square current supplied to the universal electric motor (6) during the second prefixed period, based on sampled motor currents (I);
- every said second prefixed period, determining a third value ($\omega_M$) indicating the average motor speed of the universal electric motor (6) during the second prefixed period, based on sampled motor speeds ($\omega$);
- performing a recursive algorithm based on the first ($P_{ELm}$), second ($I_{RMS}$) and third values ($\omega_M$) to estimate said first and second linear parameter (m), (q) relative to an energy balance associated with said universal electric motor;
- estimating the motor torque (T) on the basis of said second value and said estimated first and second linear parameter (m), (q).

**14.** Method according to Claims 13, comprising the step of performing a recursive algorithm based on the first ($I_{RMS}$) second ($P_{ELm}$) and third values ($\omega_M$) to estimate said first and second linear parameter (m), (q) and a further third linear parameter (R), relative to the following energy balance equation:

$$P_{El} \cong R \cdot I_{RMS}^2 + m \cdot (\omega \cdot I_{RMS}) + q \cdot \omega$$

wherein R is a value indicating electric resistance relatives to the losses in the universal electric motor (6).

**15.** Method according to Claims 13, comprising the step of performing a recursive algorithm based on the first ($I_{RMS}$) second ($P_{ELm}$) and third values ($\omega_M$) to estimate said first and second linear parameter (m), (q), and a further third linear parameter (R), and a further fourth linear parameter (K) relative to the following energy balance equation:

$$P_{El} \cong R \cdot I_{RMS} + m \cdot (\omega \cdot I_{RMS}) + q \cdot \omega + K \ .$$

**Patentansprüche**

**1.** Waschmaschine mit drehbarer Trommel (1), umfassend: ein Gehäuse (2); eine Wäschetrommel (3), im Gehäuse (2) montiert, um eine Drehachse (4) herum zu rotieren; und einen Universal-Elektromotor (6), mit der Wäschetrommel (3) verbunden, um die Wäschetrommel (3) um die Drehachse (4) herum zu rotieren; wobei die Waschmaschine mit drehbarer Trommel **dadurch gekennzeichnet ist, dass** sie ein Schätzsystem (9) umfasst, das zum Schätzen des Motordrehmoments gemäß der folgenden Gleichung konfiguriert ist:

$$T \cong m \cdot I_{RMS} + q \ ,$$

wobei T das Motordrehmoment ist, das das vom Motor an die Trommel (3) gelieferte Drehmoment angibt; m und q ein erster und ein zweiter linearer Parameter sind und $I_{RMS}$ ein erster Wert ist, der den quadratischen Mittelwert des an den Universal-Elektromotor (6) gelieferten Stroms angibt.

**2.** Waschmaschine nach Anspruch 1, wobei das Schätzsystem (9) ferner zum Schätzen des ersten und eines zweiten linearen Parameters (m), (q) basierend auf einer mit dem Universal-Elektromotor (6) assoziierten Energiebilanz konfiguriert ist.

**3.** Waschmaschine nach Anspruch 1 oder 2, wobei das Schätzsystem (9) ferner zum Abtasten des Motorstroms (I) und zum Bestimmen des ersten Werts ($I_{RMS}$) basierend auf den abgetasteten Motorströmen (I) konfiguriert ist.

**4.** Waschmaschine nach Anspruch 1 oder Anspruch 2, wobei das Schätzsystem (9) ferner konfiguriert ist zum:

- Abtasten der Motorspannung (V), des Motorstroms (I) und der Motorgeschwindigkeit ($\omega$), jeweils zu einer ersten vorbestimmten Periode;
- jeweils zu einer zweiten vorbestimmten Periode, Bestimmen des ersten Werts ($I_{RMS}$), der den quadratischen Mittelwert des an den Universal-Elektromotor (6) gelieferten Stroms während der zweiten vorbestimmten Periode basierend auf den abgetasteten Motorströmen (I) angibt;
- jeweils zu einer zweiten vorbestimmten Periode, Bestimmen eines zweiten Werts ($P_{ELM}$), der die an den

**9**

Universal-Elektromotor (6) gelieferte mittlere elektrische Energie während der zweiten vorbestimmten Periode basierend auf den abgetasteten Motorspannungen (V) und den abgetasteten Motorströmen (I) angibt;

- jeweils zu der zweiten vorbestimmten Periode, Bestimmen eines dritten Werts ($\omega_M$), der die mittlere Motorgeschwindigkeit des Universal-Elektromotors (6) während der zweiten vorbestimmten Periode basierend auf den abgetasteten Motorgeschwindigkeiten ($\omega$) angibt;

- Durchführen eines rekursiven Algorithmus basierend auf dem ersten ($I_{RMS}$), zweiten ($P_{ELM}$) und dritten Wert ($\omega_M$) zum Schätzen des ersten und zweiten linearen Parameters (m), (q) relativ zu einer mit dem Universal-Elektromotor (6) assoziierten Energiebilanz;

- Schätzen des Motordrehmoments (T) basierend auf dem ersten Wert ($I_{RMS}$) und dem geschätzten ersten und zweiten linearen Parameter (m), (q).

5. Waschmaschine nach Anspruch 4, wobei das Schätzsystem (9) ferner zum Durchführen eines rekursiven Algorithmus basierend auf dem ersten ($I_{RMS}$), zweiten ($P_{ELM}$) und dritten Wert ($\omega_M$) zum Schätzen des ersten und zweiten linearen Parameters (m), (q) und eines weiteren dritten linearen Parameters (R) relativ zur folgenden Energiebilanzgleichung konfiguriert ist:

$$P_{El} \cong R \cdot I_{RMS}^2 + m \cdot (\omega \cdot I_{RMS}) + q \cdot \omega \,,$$

wobei der dritte lineare Parameter R ein Wert ist, der den elektrischen Widerstand relativ zu den Verlusten im Universal-Elektromotor (6) angibt.

6. Waschmaschine nach Anspruch 4, wobei das Schätzsystem (9) ferner zum Durchführen eines rekursiven Algorithmus basierend auf dem ersten ($I_{RMS}$), zweiten ($P_{ELM}$) und dritten Wert ($\omega_M$) zum Schätzen des ersten, zweiten linearen Parameters (m), (q) und eines weiteren dritten linearen Parameters (R) und eines weiteren vierten linearen Parameters (K) relativ zur folgenden Energiebilanzgleichung konfiguriert ist:

$$P_{El} \cong R \cdot I_{RMS} + m \cdot (\omega \cdot I_{RMS}) + q \cdot \omega + K \,.$$

7. Waschmaschine nach Anspruch 4, wobei das Schätzsystem (9) ferner zum Durchführen eines rekursiven Verfahrens der kleinsten Quadrate basierend auf dem ersten ($I_{RMS}$), zweiten ($P_{ELM}$) und dritten Wert ($\omega_M$) zum Schätzen der ersten und zweiten linearen Parameters (m), (q) konfiguriert ist.

8. Waschmaschine nach Anspruch 4, wobei das Schätzsystem (9) ferner zum Durchführen eines rekursiven Verfahrens der linearen Interpolation basierend auf dem ersten ($I_{RMS}$), zweiten ($P_{ELM}$) und dritten Wert ($\omega_M$) zum Schätzen des ersten und zweiten linearen Parameters (m), (q) konfiguriert ist.

9. Waschmaschine nach einem der vorstehenden Ansprüche, wobei die erste vorbestimmte Periode etwa $0{,}1*10^{-3}$ Sekunden beträgt; die zweite vorbestimmte Periode etwa die halbe Periode der Hauptspannungsfrequenz beträgt.

10. Verfahren zum Schätzen des von einem Universal-Elektromotor (6) an eine drehbare Wäschetrommel (3) einer Waschmaschine (1) gelieferten Motordrehmoments (T);
wobei das Verfahren durch folgendes gekennzeichnet ist:

Schätzen des Motordrehmoments gemäß der folgenden Gleichung:

$$T \cong m \cdot I_{RMS} + q \,,$$

wobei T das Motordrehmoment ist, das das vom Motor an die Trommel gelieferte Drehmoment angibt; m und q ein erster und zweiter linearer Parameter sind und $I_{RMS}$ ein erster Wert ist, der den quadratischen Mittelwert des an den Universal-Elektromotor (6) gelieferten Stroms angibt.

11. Verfahren nach Anspruch 10, umfassend den Schritt des Schätzens des ersten und zweiten linearen Parameters (m), (q) basierend auf einer mit dem Universal-Elektromotor (6) assoziierten Energiebilanz.

**12.** Verfahren nach Anspruch 10 oder 11, umfassend die Schritte des Abtastens des Motorstroms (I) und Bestimmens des ersten Werts ($I_{RMS}$) basierend auf den abgetasteten Motorströmen (I).

**13.** Verfahren nach Anspruch 10 oder 11, umfassend die folgenden Schritte:

- Abtasten der Motorspannung (V), des Motorstroms (I) und der Motorgeschwindigkeit ($\omega$), jeweils zu einer ersten vorbestimmten Periode;
- jeweils zu einer zweiten vorbestimmten Periode, Bestimmen eines ersten Werts ($P_{ELM}$), der die an den Universal-Elektromotor (6) gelieferte mittlere elektrische Energie während der zweiten vorbestimmten Periode basierend auf den abgetasteten Motorspannungen (V) und den abgetasteten Motorströmen (I) angibt;
- jeweils zu der zweiten vorbestimmten Periode, Bestimmen eines zweiten Werts ($I_{RMS}$), der den quadratischen Mittelwert des an den Universal-Elektromotor (6) gelieferten Stroms während der zweiten vorbestimmten Periode basierend auf den abgetasteten Motorströmen (I) angibt;
- jeweils zu der zweiten vorbestimmten Periode, Bestimmen eines dritten Werts ($\omega_M$), der die mittlere Motorgeschwindigkeit des Universal-Elektromotors (6) während der zweiten vorbestimmten Periode basierend auf den abgetasteten Motorgeschwindigkeiten ($\omega$) angibt;
- Durchführen eines rekursiven Algorithmus basierend auf dem ersten ($P_{ELM}$), zweiten ($I_{RMS}$) und dritten Wert ($\omega_M$) zum Schätzen des ersten und zweiten linearen Parameters (m), (q) relativ zu einer mit dem Universal-Elektromotor assoziierten Energiebilanz;
- Schätzen des Motordrehmoments (T) basierend auf dem zweiten Wert und dem geschätzten ersten und zweiten linearen Parameter (m), (q).

**14.** Verfahren nach Anspruch 13, umfassend den Schritt des Durchführens eines rekursiven Algorithmus basierend auf dem ersten ($I_{RMS}$), zweiten ($P_{ELM}$) und dritten Wert ($\omega_M$) zum Schätzen des ersten und zweiten linearen Parameters (m), (q) und eines weiteren dritten linearen Parameters (R) relativ zur folgenden Energiebilanzgleichung:

$$P_{El} \cong R \cdot I_{RMS}^2 + m \cdot (\omega \cdot I_{RMS}) + q \cdot \omega,$$

wobei R ein Wert ist, der den elektrischen Widerstand relativ zu den Verlusten im Universal-Elektromotor (6) angibt.

**15.** Verfahren nach Anspruch 13, umfassend den Schritt des Durchführens eines rekursiven Algorithmus basierend auf dem ersten ($I_{RMS}$), zweiten ($P_{ELM}$) und dritten Wert ($\omega_M$) zum Schätzen des ersten und zweiten linearen Parameters (m), (q) und eines weiteren dritten linearen Parameters (R) und eines weiteren vierten linearen Parameters (K) relativ zur folgenden Energiebilanzgleichung:

$$P_{El} \cong R \cdot I_{RMS} + m \cdot (\omega \cdot I_{RMS}) + q \cdot \omega + K.$$

**Revendications**

**1.** Machine à laver le linge à tambour tournant (1) comprenant : une carrosserie (2) ; un tambour à laver le linge (3) monté à l'intérieur de la carrosserie (2) pour tourner autour d'un axe de rotation (4) ; et un moteur électrique universel (6) relié audit tambour à laver le linge (3) pour faire tourner le tambour à laver le linge (3) autour dudit axe de rotation (4) ;
La machine à laver le linge à tambour tournant étant **caractérisée par le fait qu'**elle comprend un système estimateur (9) configuré pour estimer le couple moteur selon l'équation :

$$T \cong m \cdot I_{RMS} + q$$

T étant le couple moteur indiquant le couple que le moteur a appliqué au tambour (3) ; m et q étant un premier et un deuxième paramètre linéaire et $I_{RMS}$ étant une première valeur indiquant le courant efficace fourni audit moteur électrique universel (6).

2. Machine à laver le linge selon la revendication 1, dans laquelle le système estimateur (9) est en outre configuré pour estimer ledit premier et un deuxième paramètre linéaire (m), (q) sur la base d'un bilan énergétique associé audit moteur électrique universel (6).

3. Machine à laver le linge selon l'une des revendications 1 ou 2, dans laquelle le système estimateur (9) est en outre configuré pour échantillonner le courant de moteur (I) et pour déterminer ladite première valeur ($I_{RMS}$) sur la base desdits courants de moteur échantillonnés (I).

4. Machine à laver le linge selon l'une des revendications 1 ou 2, dans laquelle le système estimateur (9) est en outre configuré pour :

   - échantillonner la tension de moteur (V), le courant de moteur (I) et la vitesse de moteur ($\omega$), à chaque première période préfixée ;
   - à chaque seconde période préfixée, déterminer ladite première valeur ($I_{RMS}$) indiquant le courant efficace fourni au moteur électrique universel (6) pendant la seconde période préfixée, sur la base de courants de moteur échantillonnés (I) ;
   - à chaque seconde période préfixée, déterminer une deuxième valeur ($P_{ELM}$) indiquant la puissance électrique moyenne fournie au moteur électrique universel (6) pendant la seconde période préfixée, sur la base desdites tensions de moteur échantillonnées (V) et desdites courants de moteur échantillonnés (I) ;
   - à chaque seconde période préfixée précitée, déterminer une troisième valeur ($\omega_M$) indiquant la vitesse de moteur moyenne du moteur électrique universel (6) pendant la seconde période préfixée, sur la base de vitesses de moteur échantillonnées ($\omega$) ;
   - exécuter un algorithme récursif sur la base des première ($I_{RMS}$), deuxième ($P_{ELM}$) et troisième ($\omega_M$) valeurs pour estimer les premier et deuxième paramètres linéaires (m), (q) en rapport avec un bilan énergétique associé audit moteur électrique universel (6) ;
   - estimer le couple moteur (T) sur la base de ladite première valeur ($I_{RMS}$) et desdits premier et deuxième paramètres linéaires (m), (q) estimés.

5. Machine à laver le linge selon la revendication 4, dans laquelle le système estimateur (9) est en outre configuré pour exécuter un algorithme récursif sur la base des première ($I_{RMS}$), deuxième ($P_{ELM}$) et troisième ($\omega_M$) valeurs pour estimer lesdits premier et deuxième paramètres linéaires (m), (q) et un troisième paramètre linéaire supplémentaire (R), en rapport avec l'équation de bilan énergétique suivante :

$$P_{El} \cong R \cdot I_{RMS}^2 + m \cdot (\omega \cdot I_{RMS}) + q \cdot \omega$$

le troisième paramètre linéaire R étant une valeur indiquant la résistance électrique par rapport aux pertes dans le moteur électrique universel (6).

6. Machine à laver le linge selon la revendication 4, dans laquelle le système estimateur (9) est en outre configuré pour exécuter un algorithme récursif sur la base des première ($I_{RMS}$), deuxième ($P_{ELM}$) et troisième ($\omega_M$) valeurs pour estimer les premier et deuxième paramètres linéaires (m), (q) et un troisième paramètre linéaire supplémentaire (R) et un quatrième paramètre linéaire supplémentaire (K) en rapport avec l'équation de bilan énergétique suivante :

$$P_{El} \cong R \cdot I_{RMS} + m \cdot (\omega \cdot I_{RMS}) + q \cdot \omega + K$$

**7.** Machine à laver le linge selon la revendication 4, dans laquelle le système estimateur (9) est en outre configuré pour réaliser une méthode des moindres carrés récursive sur la base des première ($I_{RMS}$), deuxième ($P_{ELM}$) et troisième ($\omega_M$) valeurs pour estimer lesdits premier et deuxième paramètres linéaires (m), (q).

**8.** Machine à laver le linge selon la revendication 4, dans laquelle le système estimateur (9) est en outre configuré pour réaliser une méthode d'interpolation linéaire récursive sur la base des première ($I_{RMS}$), deuxième ($P_{ELM}$) et troisième ($\omega_M$) valeurs pour estimer lesdits premier et deuxième paramètres linéaires (m), (q).

**9.** Machine à laver le linge selon l'une quelconque des revendications précédentes, dans laquelle la première période préfixée est d'environ $0,1*10^{-3}$ seconde ; la seconde période préfixée est environ la demi-période de fréquence de tension de secteur.

**10.** Procédé d'estimation du couple moteur (T) appliqué par un moteur électrique universel (6) à un tambour à laver le linge tournant (3) d'une machine à laver le linge (1) ;
ledit procédé étant **caractérisé par** :

- l'estimation du couple moteur selon l'équation :

$$T \cong m \cdot I_{RMS} + q$$

T étant le couple moteur indiquant le couple qu'un moteur a appliqué au tambour ; m et q étant un premier et un deuxième paramètre linéaire et $I_{RMS}$ étant une première valeur indiquant le courant efficace fourni audit moteur électrique universel (6).

**11.** Procédé selon la revendication 10, comprenant l'étape d'estimation desdits premier et deuxième paramètres linéaires (m), (q) sur la base d'un bilan énergétique associé audit moteur électrique universel (6).

**12.** Procédé selon l'une des revendications 10 ou 11, comprenant les étapes d'échantillonnage du courant de moteur (I) et de détermination de ladite première valeur ($I_{RMS}$) sur la base desdits courants de moteur échantillonnés (I).

**13.** Procédé selon l'une des revendications 10 ou 11, comprenant l'étape de :

- échantillonnage de la tension de moteur (V), du courant de moteur (I) et de la vitesse de moteur ($\omega$), à chaque première période préfixée ;
- à chaque seconde période préfixée, détermination d'une première valeur ($P_{ELM}$) indiquant la puissance électrique moyenne fournie au moteur électrique universel (6) pendant la seconde période préfixée, sur la base desdites tensions de moteur échantillonnées (V) et desdits courants de moteur échantillonnés (I) ;
- à chaque seconde période préfixée, détermination d'une deuxième valeur ($I_{RMS}$) indiquant le courant efficace fourni au moteur électrique universel (6) pendant la seconde période préfixée, sur la base de courants de moteur échantillonnés (I) ;
- à chaque seconde période préfixée, détermination d'une troisième valeur ($\omega_M$) indiquant la vitesse de moteur moyenne du moteur électrique universel (6) pendant la seconde période préfixée, sur la base de vitesses de moteur échantillonnées ($\omega$) ;
- exécution d'un algorithme récursif sur la base des première ($P_{ELM}$), deuxième ($I_{RMS}$) et troisième ($\omega_M$) valeurs pour estimer lesdits premier et deuxième paramètres linéaires (m), (q) en rapport avec un bilan énergétique associé audit moteur électrique universel ;
- estimation du couple moteur (T) sur la base de ladite deuxième valeur et desdits premier et deuxième paramètres linéaires (m), (q) estimés.

**14.** Procédé selon la revendication 13, comprenant l'étape d'exécution d'un algorithme récursif sur la base des première ($I_{RMS}$), deuxième ($P_{ELM}$) et troisième ($\omega_M$) valeurs pour estimer lesdits premier et deuxième paramètres linéaires (m), (q) et un troisième paramètre linéaire supplémentaire (R), en rapport avec l'équation de bilan énergétique suivante :

$$P_{El} \cong R \cdot I_{RMS}^2 + m \cdot (\omega \cdot I_{RMS}) + q \cdot \omega$$

R étant une valeur indiquant la résistance électrique par rapport aux pertes dans le moteur électrique universel (6).

**15.** Procédé selon la revendication 13, comprenant l'étape d'exécution d'un algorithme récursif sur la base des première ($I_{RMS}$), deuxième ($P_{ELM}$) et troisième ($\omega_M$) valeurs pour estimer lesdits premier et deuxième paramètres linéaires (m), (q) et un troisième paramètre linéaire supplémentaire (R) et un quatrième paramètre linéaire supplémentaire (K) en rapport avec l'équation de bilan énergétique suivante :

$$P_{El} \cong R \cdot I_{RMS} + m \cdot (\omega \cdot I_{RMS}) + q \cdot \omega + K \quad.$$

Fig. 1

start

Signal sampling (10kHz)
Motor Voltage
Motor current
Motor speed
100

Signal computation (10ms)
Electric power (PEIM)
Root square current (IRMS)
average speed (ωM)
110

R,m, q computation (10ms)
with recursive algorithm
(Least Square Merthod)
120

TORQUE ESTIMATION (10ms)
$T=m(I_{RMS})+q$
130

New step
(10ms)
140

Fig. 2

Fig. 3

Fig. 4

Fig. 5

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040211009 A